# EUROPÄISCHE PATENTSCHRIFT

(11) **EP 4 525 106 B1**
(45) Veröffentlichungstag und Bekanntmachung des Hinweises auf die Patenterteilung: **17.09.2025**
(21) Anmeldenummer: 24199897.0
(22) Anmeldetag: 12.09.2024
(51) Int. Cl.: H01M 8/04029, H01M 8/04007, B64D 41/00

(54) **BRENNSTOFFZELLENSYSTEM MIT EINER ZWEI-PHASENKÜHLUNG MIT EINEM EJEKTOR**
FUEL CELL SYSTEM WITH TWO-PHASE COOLING WITH EJECTOR
SYSTÈME DE PILE À COMBUSTIBLE À REFROIDISSEMENT À DEUX PHASES COMPRENANT UN ÉJECTEUR

(30) Priorität: 13.09.2023 DE 102023124683
(43) Veröffentlichungstag der Anmeldung: 19.03.2025
(73) Patentinhaber: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(56) Entgegenhaltungen:
- EP-A2- 1 289 039
- EP-B1- 2 353 200
- WO-A1-2023/072532
- DE-A1- 102020 212 939
- JP-B2- 3 837 384
- US-A1- 2004 009 382
- US-A1- 2012 304 672

## Beschreibung

### Gebiet der Erfindung

Die vorliegende Beschreibung betrifft allgemein das technische Gebiet der Luftfahrt. Insbesondere betrifft die Beschreibung ein Brennstoffzellensystem mit einer ZweiPhasenkühlung mit einem Ejektor und ein Luftfahrzeug aufweisend ein derartiges Brennstoffzellensystem.

### Hintergrund der Erfindung

Brennstoffzellen sind eine mögliche Lösung zur Stromerzeugung in Flugzeugantriebssystemen oder die emissionsfreie Bordstromversorgung (APU = Auxiliary Power Unit) ohne unerwünschte Emissionen. Polymer-Elektrolyt-Brennstoffzellen (PEMFC) erzeugen Energie und Strom durch die elektrochemische Reaktion von Wasserstoff und Sauerstoff zu Wasser. Bei dieser Reaktion entsteht Wärme, die abgeführt werden muss. In kommerziellen Brennstoffzellenstapeln wird dies über eine Flüssigkeitskühlung realisiert.

Eine potenzielle Alternative mit erheblichem Gewichtsreduktionspotenzial auf Systemebene ist der Ersatz der Flüssigkeitskühlung durch eine Zweiphasenkühlung. Hierbei wird die latente Verdampfungswärme genutzt, um große Wärmemengen von den Brennstoffzellen abzuführen. Zusätzlich verbessert der hohe Wärmeübergangskoeffizient im Vergleich zur Einphasenkühlung die Leistung des thermischen Managementsystems. Die Zweiphasenkühlung beruht auf den Phasenübergängen im Verdampfer (Brennstoffzellen) sowie im Wärmetauscher zur Umgebung (Kondensator). Um das Kühlmittel zur Brennstoffzelle pumpen zu können, ist es notwendig, dass das Kühlmittel unterkühlt ist, d.h. sich im flüssigen Zustand befindet (Vermeidung von Kavitation der Pumpe). Unterkühlung bezieht sich dabei auf den Temperaturbereich unterhalb des Siedepunkts des Kühlmittels. Das unterkühlte Kühlmittel gelangt dann in die Brennstoffzelle, wo seine Temperatur erhöht wird, und das Sieden des Kühlmittels einsetzt. Das Vorhandensein dieses steilen Temperaturgefälles in der Einlaufzone kann für die Brennstoffzelle schädlich sein. Zu niedrige Temperaturen in diesem Bereich können zu Kondensation von Wasser in den Gaskanälen (Überflutung) führen. Um dieses und andere Risiken zu bewältigen, wird in der Regel ein Vorwärmer oder Rekuperator vor dem Verdampfer (Brennstoffzelle) eingesetzt. Dieser Vorwärmer/Rekuperator kann jedoch groß sein und die Gewichtsvorteile der Zweiphasenkühlung verringern.

US 2004/009382 A1 zeigt ein Verfahren und eine Vorrichtung zur Kühlung eines Brennstoffzellenstapels. Das Kühlsystem nutzt Verdampfungskühlung und eine Überschall-Dampfkompression, um die Temperatur und den Druck des Kühlmittels im Wärmetauscher zu erhöhen. Dadurch kann die Wärmetauscherfläche verkleinert und der Kühlmittelmassenstrom reduziert werden. Der erhöhte Fluiddruck ermöglicht zudem die Zirkulation des Kühlmittels ohne die Notwendigkeit einer Umwälzpumpe, wie sie in herkömmlichen Systemen erforderlich ist.

US 2012/304672 A1 zeigt ein Brennstoffzellensystem mit gekoppelter Kältemaschine, das die von der Brennstoffzelle erzeugte Wärme nutzt, um einen Kältekreislauf anzutreiben. Ein Wärmetauscher überträgt dabei die thermische Energie der Brennstoffzelle direkt oder indirekt auf das wärmegetriebene Kühlsystem, wodurch dessen Betrieb unterstützt wird.

EP 1 289 039 A2 zeigt ein Ejektor-Kühlsystem für ein Elektrofahrzeug mit einer Brennstoffzelle, bei dem ein Ejektor im Dampfkühlkreislauf der Brennstoffzelle angeordnet ist. Ein Verdampfer im Flüssigkühlmittelkreislauf kühlt die Flüssigphase des Kühlmittels nach dem Durchfluss durch die Brennstoffzelle. Der Ejektor entfernt den im Verdampfer gebildeten Dampf und leitet ihn an einen mit der Brennstoffzelle verbundenen Kondensator weiter.

EP 2 353 200 B1 zeigt ein Brennstoffzellenstapelsystem mit einem geschlossenen Kühlkreislauf, das Wärme effizient nutzt. Der Brennstoffzellenstapel besteht aus mehreren Brennstoffzellen zwischen zwei Endplatten. Ein Brennstoffversorgungssystem liefert Brenngas, während ein Oxidationsmittelversorgungssystem Oxidationsgas zuführt. Eine Umwälzpumpe treibt eine Kühlflüssigkeit durch den Brennstoffzellenstapel, die Wärme aufnimmt und abführt. Ein Wärmetauscher überträgt die abgeführte Wärme teilweise auf das Brenngas und/oder das Oxidationsgas, um die Effizienz des Systems zu steigern.

### Zusammenfassung der Erfindung

Es kann als Aufgabe der Erfindung betrachtet werden, ein Brennstoffzellensystem mit reduziertem Gewicht bereitzustellen.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß einem Aspekt weist ein Brennstoffzellensystem ein Zwei-Phasen-Kühlsystem auf. Das Brennstoffzellensystem weist ferner mindestens eine Brennstoffzelle mit einem Kühlmitteleinlass und einem Kühlmittelauslass auf.

Gemäß einer Ausführungsform weist ein Brennstoffzellensystem ferner einen Sammler auf, wobei im Sammler eine Phasentrennung in Gas- und Flüssigphase stattfindet, wobei der Sammler mit der Brennstoffzelle in Fluidverbindung steht und eingerichtet ist, aus der Brennstoffzelle strömendes Kühlmittel in einer flüssigen Phase in einem ersten Abschnitt und einer Gasphase in einem zweiten Abschnitt zu beinhalten. Ferner einen Kondensator, wobei der Kondensator mit dem Sammler in Fluidverbindung steht, und eingerichtet ist, das Kühlmittel zu kondensieren und zu unterkühlen.

Das Brennstoffzellensystem weist ferner eine Pumpe auf, wobei die Pumpe eingerichtet ist, das unterkühlte Kühlmittel zu fördern. Das Brennstoffzellensystem weist ferner einen Ejektor auf. Der Ejektor-Einlass (Treibstrahl) kann über die Pumpe mit dem Kondensator verbunden sein. Der Ejektor-Einlass (Saugseite) kann entweder mit dem Kühlmittelauslass der Brennstoffzelle verbunden sein, oder mit dem ersten Abschnitt des Sammlers. Ferner kann der Ejektor-Einlass mit dem zweiten Abschnitt des Sammlers verbunden sein.

Ein Brennstoffzellensystem im Sinne der Erfindung ist eine technologische Einheit, die aus mehreren Komponenten besteht und zur Umwandlung chemischer Energie in elektrische Energie mittels elektrochemischer Reaktionen dient. Es umfasst in der Regel eine oder mehrere Brennstoffzellen, die als elektrochemische Zellen fungieren und die Hauptkomponente des Systems darstellen. Zusätzlich beinhaltet das System weitere Komponenten wie einen Brennstoffzufuhrmechanismus, einen Oxidationsmittelzufuhrmechanismus, eine Elektrolytlösung, Elektroden, einen Katalysator und eine elektrische Verbindung.

Das Brennstoffzellensystem nutzt eine chemische Reaktion zwischen einem Brennstoff und einem Oxidationsmittel, typischerweise Wasserstoff und Sauerstoff, um elektro-chemischen Strom zu erzeugen. Dabei entsteht Wasser als einziges Produkt, wodurch das Brennstoffzellensystem als umweltfreundliche Energiequelle gilt. Die erzeugte elektrische Energie kann dann zur Versorgung von elektrischen Geräten, Fahrzeugen oder zur Stromerzeugung in verschiedenen Anwendungen genutzt werden.

Ein Zwei-Phasen-Kühlsystem im Sinne der Erfindung ist eine Kühllösung, die darauf abzielt, große Wärmemengen effizient abzuführen, indem es den Phasenübergang von Flüssigkeit zu Dampf nutzt. Es wird häufig in Situationen eingesetzt, in denen herkömmliche einphasige Kühlsysteme an ihre Grenzen stoßen und nicht ausreichend Wärmeableitung bieten können.

Bei einem Zwei-Phasen-Kühlsystem wird ein Kühlmittel verwendet, das bei geeigneten Temperaturen und Drücken sowohl in flüssiger als auch in gasförmiger Form existieren kann. Das Kühlmittel nimmt Wärme von der zu kühlenden Quelle auf und verdampft, wodurch es von flüssigem Zustand in einen gasförmigen Zustand übergeht. Der entstehende Dampf nimmt dabei große Mengen an Wärme auf.

Der Phasenwechsel von Flüssigkeit zu Dampf ermöglicht eine effektive Wärmeübertragung. Dies führt zu einer verbesserten Kühlleistung und einer effizienteren Wärmeableitung.

Ein Zwei-Phasen-Kühlsystem besteht in der Regel aus einem Verdampfer, in dem das Kühlmittel Wärme aufnimmt und verdampft, und einem Kondensator, in dem der Dampf wieder kondensiert und die Wärme abgibt. Das Kondensat wird dann zurück in den Verdampfer geleitet, um den Kühlkreislauf fortzusetzen.

Ein Kühlmitteleinlass im Sinne der Erfindung ist eine Öffnung oder ein Anschluss in einer Brennstoffzelle eines Kühlsystems, durch den das Kühlmedium, in diesem Fall die Kühlflüssigkeit, in das System eingeführt wird. Der Kühlmitteleinlass ermöglicht den kontrollierten Eintritt der Kühlflüssigkeit in den entsprechenden Bereich oder die Komponenten, die gekühlt werden müssen.

Ein Kühlmittelauslass im Sinne der Erfindung ist eine Öffnung oder ein Anschluss in einem Kühlsystem, durch den das Kühlmedium, in diesem Fall die Kühlflüssigkeit, aus dem System abgeleitet wird. Der Kühlmittelauslass ermöglicht den kontrollierten Austritt der erwärmten Kühlflüssigkeit aus dem entsprechenden Bereich oder den Komponenten, um sie abzukühlen und den Wärmeaustausch zu gewährleisten.

Ein Sammler im Sinne der Erfindung ist ein Bauteil oder eine Vorrichtung, die dazu dient, eine Phasentrennung zwischen Gas- und Flüssigphase, beispielsweise aufgrund der Schwerkraft, durchzuführen.

In einem Sammler werden eine oder mehrere Strömungen, die Gas und Flüssigkeit enthalten, kombiniert oder zugeführt. Durch die Schwerkraft wirkt eine Trennkraft auf die Phasen, die unterschiedliche Dichten haben. Dies führt dazu, dass sich das schwerere Medium (meistens die Flüssigkeit) am Boden des Sammlers ansammelt, während das leichtere Medium (meistens das Gas) sich in der oberen Region des Sammlers befindet.

Ein möglicher Sammler ist ein wärme-gesteuerter Sammler (Heat controlled accumulator, HCA): Ein derartiger Sammler umfasst ein Volumen, das mit Dampf und Flüssigkeit eines einzigen Arbeitsfluids gefüllt ist, ohne dass es eine Membran gibt. Der Druck in einem HCA wird durch einen Heizer kontrolliert.

Ein weiterer möglicher Sammler ist ein druck-gesteuerter Sammler (Pressure controlled accumulator, PCA): Ein derartiger Sammler umfasst ein Volumen, das mechanisch durch einen Kolben oder durch gasförmigen Druck (mit einer Blase oder Membran) unter Druck gesetzt wird.

Der Sammler ist so konstruiert, dass er eine effiziente Trennung und Ansammlung der beiden Phasen ermöglicht. Dies kann durch die Verwendung von Schwerkraftabscheidern, Trennwänden, Trichtern oder anderen speziellen Strukturen erreicht werden. Das Ziel besteht darin, sicherzustellen, dass das Gas und die Flüssigkeit getrennt werden und in separaten Bereichen gesammelt werden, um eine effektive Nutzung oder Weiterverarbeitung zu ermöglichen.

Ein Kondensator im Sinne der Erfindung ist ein Bauteil oder eine Vorrichtung, die dazu dient, Dampf oder Gas in eine flüssige Phase zu kondensieren. Der Kondensator ist in Fluidverbindung mit dem Sammler, was bedeutet, dass das Kühlmittel zwischen beiden Komponenten zirkulieren kann.

Die Hauptfunktion des Kondensators besteht darin, das Kühlmittel zu kondensieren, indem es Wärme abgibt und somit von einem gasförmigen Zustand in einen flüssigen Zustand übergeht. Dieser Prozess erfolgt in der Regel durch Abkühlung des Dampfes oder Gases, indem es über den Kondensator mit einem Medium in Kontakt gebracht wird, das eine niedrigere Temperatur hat. Diese Abkühlung bewirkt, dass sich die Moleküle des Dampfes oder Gases zusammenziehen und kondensieren, wodurch sie in flüssiger Form gesammelt werden.

Darüber hinaus ist der Kondensator so eingerichtet, dass er das Kühlmittel unterkühlen kann. Unterkühlung bedeutet, dass die Temperatur des kondensierten Kühlmittels unterhalb seines Sättigungspunktes liegt, also unterhalb der Temperatur, bei der es normalerweise kondensieren würde. Dies ermöglicht es dem Kühlmittel, mehr Wärme aufzunehmen, bevor es erneut verdampft oder weitergeleitet wird. Die Unterkühlung ist wichtig, um Kavitation an der Pumpe zu vermeiden.

Eine Pumpe im Sinne der Erfindung ist ein Gerät oder eine Vorrichtung, die dazu dient, Flüssigkeiten oder Gase von einem Ort zum anderen zu fördern oder zu bewegen. Im vorliegenden Fall ist die Pumpe speziell eingerichtet, um das unterkühlte Kühlmittel zu fördern.

Die Hauptfunktion einer Pumpe besteht darin, mechanische Energie auf das Kühlmittel auszuüben, um es entlang einer Leitung oder durch ein System zu bewegen. Die Pumpe erzeugt einen Druck- oder Fließgradienten, der das Kühlmittel aus einem niedrigeren Druckbereich zu einem höheren Druckbereich fördert. Dies geschieht durch das Übertragen von kinetischer Energie oder durch das Ändern des Volumens der Pumpe, um das Kühlmittel anzusaugen und es dann in die gewünschte Richtung zu drücken.

Im spezifischen Fall des unterkühlten Kühlmittels wird die Pumpe so konfiguriert, dass sie die flüssige Phase des Kühlmittels aufnimmt und es entlang des Systems transportiert. Die Pumpe muss in der Lage sein, mit dem niedrigen Druck des unterkühlten Kühlmittels umzugehen und genügend Druck aufzubauen, um es durch das System zu fördern. Dies ermöglicht eine kontinuierliche Zirkulation des unterkühlten Kühlmittels, um die gewünschte Kühlwirkung aufrechtzuerhalten.

Es gibt verschiedene Arten von Pumpen, die für unterschiedliche Anwendungen und Fluide geeignet sind, wie zum Beispiel Zentrifugalpumpen, Kolbenpumpen oder Schraubenpumpen. Die Auswahl der richtigen Pumpe hängt von den spezifischen Anforderungen des Systems ab, einschließlich des Flussvolumens, des Druckbereichs und der Art des Kühlmittels.

Ein Ejektor im Sinne der Erfindung ist ein Gerät, das verwendet wird, um Flüssigkeiten oder Gase zu mischen und zu fördern, indem es den Druckunterschied zwischen den beiden Fluiden nutzt. Im vorliegenden Fall steht der Ejektor mit verschiedenen Komponenten des Systems, einschließlich des ersten Abschnitts des Sammlers, dem zweiten Abschnitt des Sammlers, der Pumpe, dem Kondensator und der Brennstoffzelle, in Fluidverbindung.

Die Hauptfunktion des Ejektors besteht darin, das Kühlmittel in der Gasphase aus dem ersten Abschnitt des Sammlers mit dem unterkühlten Kühlmittel aus dem Kondensator zu vermengen und anschließend der Brennstoffzelle zuzuführen. Der Ejektor nutzt den Druckunterschied zwischen den beiden Fluiden, um das Kühlmittel in der Gasphase anzusaugen und mit dem unterkühlten Kühlmittel zu vermischen.

Der Ejektor arbeitet nach dem Prinzip des Treibstrahleffekts. Das unterkühlte Kühlmittel wird durch die Pumpe in den Ejektor getrieben und dort in einer Düse beschleunigt. Dadurch entsteht ein Niederdruckbereich im Ejektor, der das Kühlmittel in der Gasphase aus dem ersten Abschnitt des Sammlers ansaugt. Die beiden Ströme werden dann im Ejektor miteinander vermischt und bilden eine homogene Mischung aus Gas und unterkühltem Kühlmittel.

Diese Mischung wird anschließend zur Brennstoffzelle gefördert, um dort für die Kühlung zu sorgen. Durch die Vermischung des Kühlmittels in der Gasphase mit dem unterkühlten Kühlmittel wird eine Vorwärmung des Kühlmittels erreicht und die Unterkühlung des Kühlmittels am Kühlmitteleinlass der Brennstoffzelle kompensiert.

Der Ejektor spielt eine entscheidende Rolle bei der Vermengung und Zuführung des Kühlmittels in der Gasphase mit dem unterkühlten Kühlmittel im System. Er ermöglicht eine effiziente Nutzung der vorhandenen Druckdifferenz und gewährleistet eine gleichmäßige Verteilung des Kühlmittels zur Kühlung der Brennstoffzelle.

Ein weiterer Vorteil besteht in der Zuführung von Gasblasen im Zustrom zum Kühlmitteleinlass der Brennstoffzelle, welche vorteilhaft sind, um Siedeverzug des Kühlmittels entgegenzuwirken. Sie helfen dabei, die Oberflächenspannung zu verringern, was zu einem effektiveren Wärmeaustausch bei höheren Temperaturen führt

Gemäß einer Ausführungsform umfasst der Ejektor ein Venturi-Rohr.

Ein Venturi-Rohr ist ein spezieller Rohrabschnitt mit einer verengten Querschnittsfläche in der Mitte. Es besteht aus einem breiteren Einlass, einem verengten Hals und einem breiteren Auslass.

Die Funktionsweise eines Ejektors in Form eines Venturi-Rohrs basiert auf dem Bernoulli-Prinzip und dem Druckunterschied, der durch die Geschwindigkeitsänderung des Fluids in einem Venturi-Rohr entsteht. Wenn ein Fluid, beispielsweise ein Gas oder eine Flüssigkeit, durch den Einlass des Ejektors strömt, passiert es den verengten Hals des Venturi-Rohrs. In diesem engen Bereich erhöht sich die Geschwindigkeit des Fluids, während der Druck abnimmt.

Der Druckunterschied zwischen dem Einlass und dem Hals des Ejektors erzeugt einen Sogeffekt. Dadurch wird ein zweites Fluid, das sich in einer anderen Leitung oder einem anderen Behälter befindet, in den Ejektor gezogen. Das zweite Fluid wird dann mit dem ersten Fluid im Auslass des Ejektors vermischt und kann gemeinsam weitergeleitet oder verwendet werden.

Gemäß einer Ausführungsform ist die Brennstoffzelle ein Brennstoffzellenstapel mit mindestens einer Grundplatte, und die Grundplatte umfasst den Ejektor.

Durch die Kombination dieser beiden Komponenten wird eine Gewichtsreduzierung erreicht, da separate Ejektoren und zusätzliche Verbindungsleitungen eingespart werden können. Normalerweise erfordert ein herkömmliches System separate Ejektoren, die in einer externen Verbindung mit dem Brennstoffzellenstapel stehen. Diese zusätzlichen Komponenten erhöhen das Gesamtgewicht und den Platzbedarf des Systems.

Durch die Integration des Ejektors in die Grundplatte des Brennstoffzellenstapels wird das Gewicht reduziert, da keine zusätzlichen externen Komponenten benötigt werden. Die Grundplatte dient sowohl als strukturelles Element des Brennstoffzellenstapels als auch als Ejektor. Dadurch werden Gewicht und Platz eingespart, was insbesondere in Anwendungen mit begrenztem Bauraum von Vorteil ist, wie beispielsweise in der Luft- und Raumfahrt oder in mobilen Anwendungen.

Die Gewichtseinsparung durch die Integration des Ejektors in die Grundplatte des Brennstoffzellenstapels trägt zur Effizienz des Systems bei, indem sie das Gesamtgewicht reduziert und gleichzeitig eine kompakte Bauweise ermöglicht. Dieser Vorteil kann zu einer verbesserten Leistung, einer erhöhten Energieeffizienz und einer erhöhten Reichweite des Brennstoffzellensystems führen.

Gemäß einer Ausführungsform umfasst das Kühlmittel Methanol und/oder Ethanol.

Methanol und Ethanol bieten als Kühlmittel verschiedene Vorteile. Sie haben einen niedrigeren Siedepunkt, wodurch sie bei höheren Temperaturen verdampfen können und somit eine bessere Kühlung ermöglichen. Wesentlicher Vorteil von Alkoholen ist ihr niedriger Gefrierpunkt und ihre hohe Verdampfungsenthalpie

Ein weiterer Vorteil liegt in der geringen Viskosität von Methanol im Vergleich zu Wasser. Dadurch wird der Durchfluss erleichtert und der Energieverbrauch der Pumpe verringert.

Ferner weisen Methanol und Ethanol eine hohe Verdampfungsenthalpie auf. Dadurch können sehr kleine Massenströme im System realisiert werden, wodurch Druckverlust reduziert wird. Dadurch können Leitungen und Pumpen kleiner dimensioniert werden als mit der Flüssigkeitskühlung, was zu einer Einsparung des Gewichts im System führt.

Gemäß einer Ausführungsform ist die mindestens eine Brennstoffzelle ein Brennstoffzellenstapel mit einem Medienmodul, wobei das Medienmodul den Ejektor umfasst.

Gemäß der Erfindung umfasst das Brennstoffzellensystem ferner eine Bypass-Leitung mit einem Pitot-Einsatz.

Der Vorteil eines Pitot-Einsatzes kann dabei, darin gesehen werden das gezielt die Gasphase bei einer ringförmigen Strömung abgezapft werden kann. Die Gasphase hat eine höhere Enthalpie als die wandnahe Flüssigphase, dadurch kann die Unterkühlung am Eintritt der Brennstoffzelle besser reduziert werden.

Gemäß einem Aspekt umfasst ein Luftfahrzeug ein Brennstoffzellensystem der genannten Bauart.

Gemäß einer Ausführungsform weist das Brennstoffzellensystem ferner eine Bypass-Leitung aufweisend eine Pumpe auf, wobei der Kühlmitteleingang über die Bypass-Leitung mit dem Kühlmittelausgang in Fluidverbindung steht.

Die Bypass-Leitung ermöglicht es, eine gezielte Umgehung des normalen Kühlkreislaufs zu erreichen und das warme Kühlmedium direkt zum kalten Kühlmedium zu leiten.

Dadurch kann eine schnelle und effiziente Wärmeübertragung ermöglicht werden, um die Temperatur des Kühlmediums effektiv zu erhöhen. Die Bypass-Leitung kann in verschiedenen Anwendungen eingesetzt werden, um eine gezielte Kühlung oder eine spezielle Temperaturregelung zu ermöglichen und einen Vorwärmer/Rekuperator verzichtbar zu machen.

Gemäß einer Ausführungsform weist das Brennstoffzellensystem ferner zwischen Kühlmitteleinlass und Kühlmittelauslass ein thermisch leitendes Element auf, wobei das thermische leitende Element eingerichtet ist Wärme von Kühlmittelauslass zu Kühlmitteleinlass zu übertragen.

Der Hauptvorteil eines thermisch leitenden Elements zwischen dem Kühlmitteleinlass und dem Kühlmittelauslass besteht in der effizienten Wärmeübertragung. Durch die Verwendung eines thermisch leitenden Elements kann die Wärme, die sich im Kühlmittelauslass angesammelt hat, effektiv auf den Kühlmitteleinlass übertragen werden. Dadurch wird die Wärmeabfuhr verbessert und die Temperatur im Kühlkreislauf stabilisiert, indem die Kühlflüssigkeit vorgewärmt wird.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: ein Brennstoffzellensystem; (nicht Bestandteil der Erfindung)
- **Fig. 2**: ein weiteres Brennstoffzellensystem; (nicht Bestandteil der Erfindung)
- **Fig. 3**: ein weiteres Brennstoffzellensystem; (nicht Bestandteil der Erfindung)
- **Fig. 4**: einen Pitot-Einsatz;
- **Fig. 5**: ein weiteres Brennstoffzellensystem mit einem Pitot-Einsatz;
- **Fig. 6**: ein Luftfahrzeug.

### Detaillierte Beschreibung von Ausführungsbeispielen

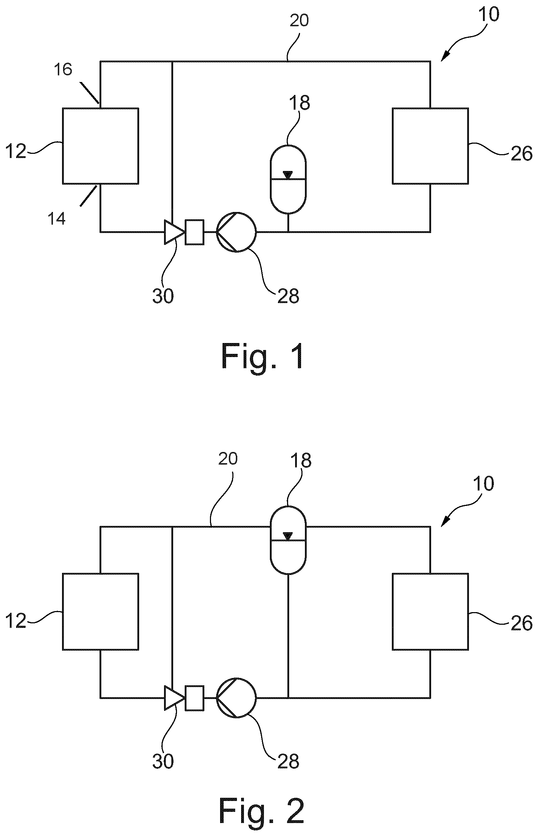

Fig. 1 (nicht Bestandteil der Erfindung) zeigt ein Brennstoffzellensystem 10 das mit einem effizienten Zwei-Phasen-Kühlsystem ausgestattet ist. Das Brennstoffzellensystem 10 umfasst mindestens eine Brennstoffzelle 12, die einen Kühlmitteleinlass 14 und einen Kühlmittelauslass 16 aufweist.

Zentraler Bestandteil des Kühlsystems ist der Sammler 18, der als Kompensation für die Ausdehnung des Kühlmittels und zur Bedruckung des Kühlsystems dient.

Um das Kühlmittel weiter zu behandeln, ist ein Kondensator 26 in das System 10 integriert. Der Kondensator 26 steht in Fluidverbindung mit dem Sammler 18 und ist dafür ausgelegt, das Kühlmittel 20 zu kondensieren und zu unterkühlen. Dadurch wird die Wärme effizient aus dem Kühlmittel abgeführt.

Um den Fluss des unterkühlten Kühlmittels 20 zu gewährleisten, kommt eine Pumpe 28 zum Einsatz. Die Pumpe 28 ist darauf ausgelegt, das unterkühlte Kühlmittel 20 zu fördern und den Kreislauf aufrechtzuerhalten.

Ein weiteres entscheidendes Element des Zwei-Phasen-Kühlsystems ist der Ejektor 30. Der Ejektor 30 steht in Fluidverbindung mit dem Einlass 14 und dem Auslass 16 der Brennstoffzelle 12. Seine Aufgabe besteht darin, das Kühlmittel in der Gasphase aus dem Auslass 16 mit dem unterkühlten Kühlmittel aus dem Kondensator 26 zu vermengen und es anschließend der Brennstoffzelle 12 über den Einlass 14 zuzuführen.

Durch das Zusammenspiel dieser Komponenten ermöglicht das Zwei-Phasen-Kühlsystem eine effiziente Kühlung der Brennstoffzelle 12. Es gewährleistet eine optimale Temperaturregelung, indem die Unterkühlung beim Einlass 14 verringert wird und trägt somit zur Leistungsfähigkeit und Langlebigkeit des Brennstoffzellensystems bei.

Fig. 2 (nicht Bestandteil der Erfindung) zeigt eine weitere Ausführungsform eines Brennstoffzellensystems 10 das mit einem effizienten Zwei-Phasen-Kühlsystem ausgestattet ist. Das Brennstoffzellensystem 10 umfasst ebenfalls mindestens eine Brennstoffzelle 12, die einen Kühlmitteleinlass 14 und einen Kühlmittelauslass 16 aufweist.

Der wesentliche Unterschied zu der Ausführungsform von Figur 1 ist dass der Sammler in Verbindung mit der Rückführungslinie ist und sich dadurch die Gasphase mit der Flüssigphase vermischen können. Ferner, dass der Sammler in Verbindung mit der Rückführungsleitung steht und dadurch die Gasphase und Flüssigphase voneinander getrennt werden können.

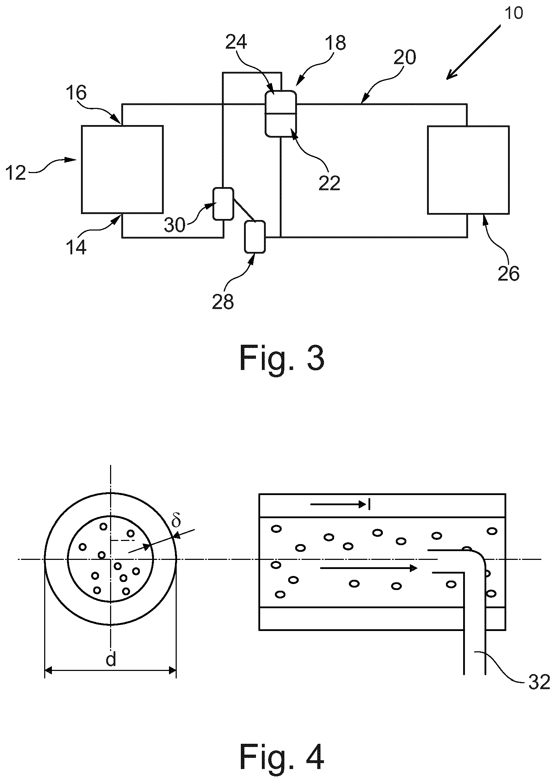

Fig. 3 (nicht Bestandteil der Erfindung) zeigt ein Brennstoffzellensystem 10 das mit einem effizienten Zwei-Phasen-Kühlsystem ausgestattet ist. Das Brennstoffzellensystem 10 umfasst mindestens eine Brennstoffzelle 12, die einen Kühlmitteleinlass 14 und einen Kühlmittelauslass 16 aufweist.

Zentraler Bestandteil des Kühlsystems ist der Sammler 18, der eine Phasentrennung zwischen der Gas- und Flüssigphase aufgrund der Schwerkraft ermöglicht. Der Sammler 18 steht in direkter Fluidverbindung mit der Brennstoffzelle 12 und sorgt dafür, dass das Kühlmittel 20 aus der Brennstoffzelle in zwei Abschnitte aufgeteilt wird. Dabei befindet sich das Kühlmittel 20 in flüssiger Phase im ersten Abschnitt 22 des Sammlers 18 und in gasförmiger Phase im zweiten Abschnitt 24.

Um das Kühlmittel weiter zu behandeln, ist ein Kondensator 26 in das System 10 integriert. Der Kondensator 26 steht in Fluidverbindung mit dem Sammler 18 und ist dafür ausgelegt, das Kühlmittel 20 zu kondensieren und zu unterkühlen. Dadurch wird die Wärme effizient aus dem Kühlmittel abgeführt.

Um den Fluss des unterkühlten Kühlmittels 20 zu gewährleisten, kommt eine Pumpe 28 zum Einsatz. Die Pumpe 28 ist darauf ausgelegt, das unterkühlte Kühlmittel 20 zu fördern und den Kreislauf aufrechtzuerhalten.

Ein weiteres entscheidendes Element des Zwei-Phasen-Kühlsystems ist der Ejektor 30. Der Ejektor 30 steht in Fluidverbindung mit dem ersten Abschnitt 22 des Sammlers 18, dem zweiten Abschnitt 24 des Sammlers 18, der Pumpe 28, dem Kondensator 26 und der Brennstoffzelle 12. Seine Aufgabe besteht darin, das Kühlmittel 20 in der Gasphase aus dem Sammler 18 mit dem unterkühlten Kühlmittel aus dem Kondensator 26 zu vermengen und es anschließend der Brennstoffzelle 12 zuzuführen.

Durch das Zusammenspiel dieser Komponenten ermöglicht das Zwei-Phasen-Kühlsystem eine effiziente Kühlung der Brennstoffzelle 12. Es gewährleistet eine optimale Temperaturregelung und trägt somit zur Leistungsfähigkeit und Langlebigkeit des Brennstoffzellensystems 10 bei.

Der wesentliche Unterschied zu der Ausführungsform zu Figur 1 (nicht Bestandteil der Erfindung) und Figur 2 (nicht Bestandteil der Erfindung) ist eine Phasentrennung im Sammler und die gezielte Einspritzung der Dampfphase über den Ejektor zum Einlass der Brennstoffzelle hin.

Figur 4 zeigt ein Pitot-Einsatz 32 innerhalb einer Kühlmittelleitung. Hierdurch kann gezielt die Gasphase bei einer ringförmigen Strömung abgezapft werden. Die Gasphase hat eine höhere Enthalpie als die wandnahe Flüssigphase, dadurch kann die Unterkühlung am Eintritt der Brennstoffzelle besser reduziert werden.

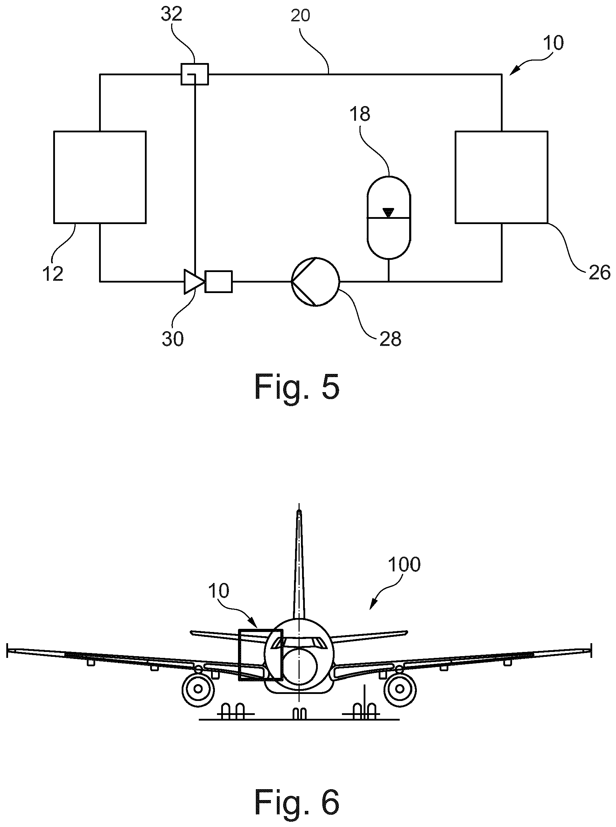

Figur 5 zeigt eines Brennstoffzellensystems 10 mit einem Pitot-Einsatz 32 innerhalb einer Kühlmittelleitung.

Fig. 6 zeigt ein Luftfahrzeug 100 mit einem beschriebenen Brennstoffzellensystem 10. Hierdurch kann auf einen Vorwärmer/Rekuperator verzichtet werden, was zu vorteilhaften Gewichtseinsparungen führt

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Brennstoffzellensystem (10) mit einem Zwei-Phasen-Kühlsystem, aufweisend:
mindestens eine Brennstoffzelle (12) mit einem Kühlmitteleinlass (14) und
einem Kühlmittelauslass (16),
einen Kondensator (26), wobei der Kondensator (26) eingerichtet ist, das Kühlmittel (20) zu kondensieren und zu unterkühlen,
eine Pumpe (28), wobei die Pumpe (28) eingerichtet ist das unterkühlte Kühlmittel (20) zu fördern,
mindestens einen Ejektor (30), wobei der Ejektor (30) mit dem Kühlmittelauslass (16), der Pumpe (28), dem Kondensator (26) und der Brennstoffzelle (12) in Fluidverbindung steht und eingerichtet ist, das Kühlmittel der Brennstoffzelle (12) zuzuführen,
**dadurch gekennzeichnet, dass**
das Brennstoffzellensystem (10) ferner eine Bypassleitung mit einem Pitot-Einsatz (32) umfasst.

2. Brennstoffzellensystem (10) nach Anspruch 1, ferner aufweisend:
einen Sammler (18), wobei im Sammler (18) eine Phasentrennung in Gas- und Flüssigphase stattfindet, wobei der Sammler (18) mit der Brennstoffzelle (12) in Fluidverbindung steht und eingerichtet ist, aus der Brennstoffzelle strömendes Kühlmittel (20) in einer flüssigen Phase in einem ersten Abschnitt (22) und einer Gasphase in einem zweiten Abschnitt (24) zu beinhalten, wobei der Ejektor (30) eingerichtet ist, das Kühlmittel (20) in der Gasphase aus dem Sammler (18) mit dem unterkühlten Kühlmittel aus dem Kondensator (26) zu vermengen und der Brennstoffzelle (12) zuzuführen.

3. Brennstoffzellensystem (10) nach einem der vorhergehenden Ansprüche, wobei der Ejektor (30) ein Venturi-Rohr umfasst.

4. Brennstoffzellensystem (10) nach einem der vorhergehenden Ansprüche, wobei die mindestens eine Brennstoffzelle (12) ein Brennstoffzellenstapel mit mindestens einer Grundplatte ist, und die Grundplatte den Ejektor (30) umfasst.

5. Brennstoffzellensystem (10) nach einem der vorhergehenden Ansprüche, wobei das Kühlmittel (20) Methanol und/oder Ethanol umfasst.

6. Brennstoffzellensystem (10) nach einem der vorhergehenden Ansprüche, wobei die mindestens eine Brennstoffzelle (12) ein Brennstoffzellenstapel mit einem Medienmodul ist, wobei das Medienmodul den Ejektor (30) umfasst.

7. Luftfahrzeug (100) mit einem Brennstoffzellensystem (10) nach einem der vorhergehenden Ansprüche.

## Claims

1. Fuel cell system (10) with a two-phase cooling system, comprising:
at least one fuel cell (12) with a coolant inlet (14) and a coolant outlet (16),
a capacitor (26), wherein the capacitor (26) is configured to condense and to supercool the coolant (20),
a pump (28), wherein the pump (28) is configured to convey the supercooled coolant (20),
at least one ejector (30), wherein the ejector (30) is in fluid connection with the coolant outlet (16), the pump (28), the capacitor (26) and the fuel cell (12) and is configured to supply the coolant to the fuel cell (12),
**characterised in that**
the fuel cell system (10) further comprises a bypass line with a Pitot insert (32).

2. Fuel cell system (10) according to claim 1, further comprising:
a collector (18), wherein a phase separation in gas and liquid phase takes place in the collector (18), wherein the collector (18) is in fluid connection with the fuel cell (12) and is configured to contain coolant (20) flowing out of the fuel cell in a liquid phase in a first section (22) and a gas phase in a second section (24), wherein the ejector (30) is configured to mix the coolant (20) in the gas phase from the collector (18) with the supercooled coolant from the capacitor (26) and supply it to the fuel cell (12).

3. Fuel cell system (10) according to one of the preceding claims, wherein the ejector (30) comprises a Venturi tube.

4. Fuel cell system (10) according to one of the preceding claims, wherein the at least one fuel cell (12) is a fuel cell stack with at least one base plate, and the base plate comprises the ejector (30).

5. Fuel cell system (10) according to one of the preceding claims, wherein the coolant (20) comprises methanol and/or ethanol.

6. Fuel cell system (10) according to one of the preceding claims, wherein the at least one fuel cell (12) is a fuel cell stack with a media module, wherein the media module comprises the ejector (30).

7. Aircraft (100) with a fuel cell system (10) according to one of the preceding claims.

## Revendications

1. Système de pile à combustible (10) avec un système de refroidissement à deux phases, comprenant :
au moins une pile à combustible (12) avec une entrée de réfrigérant (14) et une sortie de réfrigérant (16),
un condenseur (26), le condenseur (26) étant configuré pour condenser et
sous-refroidir le réfrigérant (20),
une pompe (28), la pompe (28) étant configurée pour transporter le réfrigérant sous-refroidi (20),
au moins un éjecteur (30), l'éjecteur (30) étant en communication fluidique avec la sortie de réfrigérant (16), la pompe (28), le condenseur (26) et la pile à combustible (12) et étant configuré pour fournir le réfrigérant à la pile à combustible (12),
**caractérisé en ce que**
le système de pile à combustible (10) comprend en outre une conduite de dérivation avec un insert de Pitot (32).

2. Système de pile à combustible (10) selon la revendication 1, comprenant en outre:
un collecteur (18), une séparation de phase en phase gazeuse et liquide ayant lieu dans le collecteur (18), le collecteur (18) étant en communication fluidique avec la pile à combustible (12) et étant configuré pour contenir du réfrigérant (20) s'écoulant depuis la pile à combustible dans une phase liquide dans une première section (22) et une phase gazeuse dans une seconde section (24), l'éjecteur (30) étant configuré pour mélanger le réfrigérant (20) dans la phase gazeuse provenant du collecteur (18) avec le réfrigérant sous-refroidi provenant du condenseur (26) et le fournir à la pile à combustible (12).

3. Système de pile à combustible (10) selon l'une quelconque des revendications précédentes, dans lequel l'éjecteur (30) comprend un tube Venturi.

4. Système de pile à combustible (10) selon l'une quelconque des revendications précédentes, dans lequel l'au moins une pile à combustible (12) est un empilement de piles à combustible avec au moins une plaque de base, et la plaque de base comprend l'éjecteur (30).

5. Système de pile à combustible (10) selon l'une quelconque des revendications précédentes, dans lequel le réfrigérant (20) comprend du méthanol et/ou de l'éthanol.

6. Système de pile à combustible (10) selon l'une quelconque des revendications précédentes, dans lequel l'au moins une pile à combustible (12) est un empilement de piles à combustible avec un module de milieu, le module de milieu comprenant l'éjecteur (30).

7. Aéronef (100) comprenant un système de pile à combustible (10) selon l'une quelconque des revendications précédentes.
